**Europäisches Patentamt**

**European Patent Office**

**Office européen des brevets**

(19)

(11) Veröffentlichungsnummer : **0 379 008 B1**

(12) **EUROPÄISCHE PATENTSCHRIFT**

(45) Veröffentlichungstag der Patentschrift :
**30.09.92 Patentblatt 92/40**

(21) Anmeldenummer : **90100194.1**

(22) Anmeldetag : **05.01.90**

(51) Int. Cl.$^5$ : **C08G 18/08,** C08G 18/18,
C08G 18/48, C08G 18/65,
C08G 18/66, C08G 18/76,
// (C08G18/08, 101:00)

(54) **Verfahren zur Herstellung von Polyurethan-Weichformschaumstoffen niedriger Rohdichte.**

Die Akte enthält technische Angaben, die nach dem Eingang der Anmeldung eingereicht wurden und die nicht in dieserPatentschrift enthalten sind.

(30) Priorität : **17.01.89 DE 3901189**

(43) Veröffentlichungstag der Anmeldung :
**25.07.90 Patentblatt 90/30**

(45) Bekanntmachung des Hinweises auf die
Patenterteilung :
**30.09.92 Patentblatt 92/40**

(84) Benannte Vertragsstaaten :
**BE DE ES FR GB IT NL SE**

(56) Entgegenhaltungen :
**EP-A- 0 296 449**
**EP-A-00 108 42**
**EP-A-01 358 67**
**GB-A-13 650 15**

(73) Patentinhaber : **BAYER AG**
**W-5090 Leverkusen 1 Bayerwerk (DE)**

(72) Erfinder : **Samaritter, Reinhard**
**An der Lichtenburg 10**
**W-5090 Leverkusen (DE)**
Erfinder : **Gansen, Peter, Dr.**
**Roggendorf Strasse 57**
**W-5000 Köln 89 (DE)**
Erfinder : **Seel, Klaus, Dr.**
**Märchenstrasse 72**
**W-5000 Köln 80 (DE)**

EP 0 379 008 B1

## Beschreibung

Polyurethan-Weichformschaumstoffe finden bekanntlich eine sehr verbreitete Anwendung und werden speziell in der Automobilindustrie und in der Möbelindustrie genutzt. Die Qualität der beim Einsatz als Sitz- und Lehnenpolster üblichen Polyurethan-Weichformschaumstoffe wird von ihrer Rohdichte mitbestimmt. Unabhängig von der Art der zur Herstellung von Formschaumstoffen eingesetzten Basisrohstoffe (Isocyanate/Polyole) hat sich für die verschiedenen Anwendungen und die damit verbundenen Anforderungen ein bestimmtes Rohdichteniveau als zweckmäßig und praxisgerecht erwiesen.

Die Produktion von Formteilen mit unterschiedlichen Rohdichten bei unveränderter Verschäumungsrezeptur läßt sich beim heute üblichen Stand der Technik bisher nur durch die Verwendung von physikalisch wirkenden Treibmitteln erzielen. Insbesondere haben die leicht handhabbaren Fluorchlorkohlenwasserstoffe (FCKW's) und hier speziell das Monofluortrichlormethan (FCKW 11) hierfür einen herausragenden Stellenwert erreicht. Die Anwendung von reduzierten Drücken während des Schäumvorgangs zur Rohdichtereduktion hat sich aufgrund der damit verbundenen aufwendigen Technik bisher nicht durchsetzen können. Eine Erhöhung der Rohstofftemperatur zur Erreichung einer niedrigen Rohdichte bei sonst identischen Verschäumparametern schien keinen Fortschritt zu versprechen, da Gasvolumenberechnungen nur eine geringe Rohdichteabnahme erwarten lassen. Modellrechnungen auf Basis der idealen Gasgleichung ergeben bei einer Erhöhung der Rohstofftemperatur um 15°C einen geschätzten Rohdichtegewinn von etwa

$$\frac{\Delta V}{V} = \frac{\Delta T}{T} = 0,04 = 4\ \%.$$

Diese Rechnung basiert auf der Annahme einer mittleren Reaktionstemperatur von 80°C. Überraschenderweise wurde nun aber gefunden, daß eine Erhöhung der Rohstofftemperatur um 15°C, z.B. von 25°C auf 40°C, eine Rohdichtereduktion von über 10% bewirkt. Diese Verminderung läßt sich nicht mit der temperaturbedingten Volumenzunahme des entstehenden Kohlendioxids erklären.

Die Erfindung betrifft somit ein Verfahren, bei dem nur durch Erhöhung der Rohstofftemperatur eine deutlich niedrigere Rohdichte der entstehenden Weichformschaumteile erzielt wird.

Gegenstand der Erfindung ist ein Verfahren zur Herstellung von Polyurethan-Weichformschaumstoffen niedriger Rohdichte durch Umsetzung von 1.) Polyisocyanaten mit 2.) Verbindungen mit mindestens zwei gegenüber Isocyanaten reaktionsfähigen Wasserstoffatomen vom Molekulargewicht 400 - 10 000 in Gegenwart von 3.) Katalysatoren und 4.) Wasser Treibmittel sowie gegebenenfalls in Gegenwart von 5.) Verbindungen mit mindestens zwei gegenüber Isocyanaten reaktionsfähigen Wasserstoffatomen vom Molekulargewicht 32 bis 399 als Kettenverlängerungs- und Vernetzungsmittel und 6.) weiteren, an sich bekannten Hilfs- und Zusatzmitteln in einer geschlossenen Form,

das dadurch gekennzeichnet ist,

daß das Reaktionsgemisch vor der Schaumbildung auf eine Temperatur von mindestens 40°C, vorzugsweise von 40 - 60°C, gebracht worden ist und daß blockierte Amine als Katalysatoren mitverwendet werden.

Erfindungsgemäß bevorzugt ist,

– daß als Polyisocyanate solche auf Basis von Diphenylmethan-4,4'-diisocyanat eingesetzt werden,

– daß zusätzlich organische Treibmittel mitverwendet werden,

– daß als Verbindungen mit mindestens zwei gegenüber Isocyanaten reaktionsfähigen Wasserstoffatomen vom Molekulargewicht 400 - 10 000 mindestens zwei Hydroxylgruppen aufweisende Polyether, welche mindestens 10 Gew.-% (bezogen auf alle Hydroxylgruppen) primäre Hydroxylgruppen aufweisen, eingesetzt werden.

Zur Herstellung von Weichformschaumstoffen wird üblicherweise in einem Rohstofftemperaturintervall von 20°C bis 30°C gearbeitet. Eine Temperatur von z.B. 45°C wurde bisher nicht eingesetzt, weil dann die Gefahr besteht, daß eingesetztes FCKW 11 verdampft, bzw. weil die Reaktivität der Reaktionspartner im Vergleich zur Raumtemperatur drastisch erhöht ist. Das erfindungsgemäße Verfahren erlaubt es nun, auf FCKW's vollständig zu verzichten; beide mit der Temperaturerhöhungen verbundenen Probleme lassen sich mithin erfindungsgemäß vermeiden.

Die durch die Erhöhung der Rohstofftemperatur bedingte Steigerung der Reaktivität führt naturgemäß zu einem veränderten Fließverhalten, weil das Reaktionsgemisch früher ancremt. Durch eine Modifizierung der Katalyse, z.B. durch Einsatz blockierter Amine und/oder eine Erniedrigung der Katalysatormenge, läßt sich jedoch ein mindestens gleichwertiges Fließverhalten erreichen. Die Erniedrigung der Anfangsviskosität führt sogar zu einer tendenziell besseren Fließfähigkeit.

Zur Herstellung der Polyurethan-Weichformschaumstoffe werden erfindungsgemäß als Ausgangskomponenten verwendet:

1. Polyisocyanate der an sich bekannten Art, z.B. vom Typ des Diphenylmethandiisocyanats und/oder des Toluylendiisocyanats, z.B. das 2,4- und 2,6-Toluylendiisocyanat, sowie beliebige Gemisch dieser Isomeren ("TDI"); 4,4'- und/oder 2,4'-Diphenylmethandiisocyanat (MDI), Hexamethylendiisocyanat und/oder Isophorondiisocyanat, Polyphenylpolymethylen-polyisocyanate, wie sie durch Anilin-Formaldehyd-Kondensation und anschließende Phosgenierung hergestellt werden ("rohes MDI"), ferner durch Carbodiimidgruppen, Urethangruppen, Allophanatgruppen, Isocyanuratgruppen, Harnstoffgruppen oder Biuretgruppen modifizierte Polyisocyanate, die sich vom 2,4- und/oder 2,6-Toluylendiisocyanat bzw. vom 4,4'- und/oder 2,4'-Diphenylmethandiisocyanat und/oder Hexamethylendiisocyanat und/oder Isophorondiisocyanat ableiten, ferner alkylsubstituierte MDI-Typen, wie sie beispielsweise in DE-OS 2 935 318, DE-OS 3 032 128 und DE-OS 3 032 358 beschrieben werden.

Als erfindungsgemäß einzusetzende Polyisocyanate kommen vorzugsweise solche auf Basis von Diphenylmethan-4,4'-diisocyanat (MDI) in Betracht z.B.:

a) Diphenylmethandiisocyanate im Gemisch mit Polyphenyl-polymethylen-polyisocyanaten, wobei der Anteil des Polyphenylpolymethylen-polyisocyanates 0 - 40 Gew.-% und der Gehalt an Diphenylmethandiisocyanat-Isameren 100 - 60 Gew.-% betragen kann.

b) Urethanmodifizierte aromatische Di-/Poly-isocyanate mit einem NCO-Gehalt von 15 - 30 Gew.-%, welche erhalten werden durch Umsetzung einer wie unter a) beschriebenen Mischung aus Diphenylmethandiisocyanaten und Polyphenyl-polymethylen-polyisocyanaten mit einer Hydroxylverbindung, gegebenenfalls auch mehreren Hydroxylverbindungen, deren Funktionalität 2 bis 6 beträgt.

c) Gemische der unter a) und/oder b) bezeichneten MDI-Produkte mit maximal 25 Gew.-% aliphatischen, cycloaliphatischen, heterocyclischen oder weiteren andersartigen aromatischen Polyisocyanaten, wie sie z.B. von W. Siefken in Justus Liebigs Annalen der Chemie, 562, Seiten 75 bis 136, beschrieben werden.

2. Verbindungen mit mindestens zwei gegenüber Isocyanaten reaktionsfähigen Wasserstoffatomen von einem Molekulargewicht in der Regel von 400 -10 000 ("Polyol-Komponente"). Hierunter versteht man neben Aminogruppen, Thiolgruppen oder Carboxylgruppen aufweisenden Verbindungen vorzugsweise Hydroxylgruppen aufweisende Verbindungen, insbesondere 2 bis 8 Hydroxylgruppen aufweisende Verbindungen, speziell solche vom Molekulargewicht 1000 bis 6000, vorzugsweise 2000 bis 6000, z.B. mindestens zwei, in der Regel zwei bis acht, vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und sie sie z.B. in der DE-OS 2 832 253, Seiten 11 - 18, beschrieben werden. Vorzugsweise weisen sie eine OH-Zahl von 28 bis 56 auf. Mindestens zwei Hydroxylgruppen aufweisende Polyether, welche mindestens 10 Gew.-% primäre Hydroxylgruppen (bezogen auf alle Hydroxylgruppen) aufweisen, sind erfindungsgemäß besonders bevorzugt.

3. Als Katalysatoren blockierte Amine der an sich bekannten Art wie Ameisensäure-blockierter Bis(dimethyl-aminoethyl)ether, vorzugsweise in einer Menge von 0,2 - 0,5 Gew.-Tln., bezogen auf 100 Gew.-Tln. der "Polyol-Komponente".

4. Wasser als Treibmittel, vorzugsweise in einer Menge von 2 bis 6 Gew.-Teilen pro 100 Gew.-Teile der Komponente 2 ("Polyol-Komponente").

5. Gegebenenfalls Verbindungen mit mindestens zwei gegenüber Isocyanaten reaktionsfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 10 - 20, beschrieben.

6.Gegebenenfalls werden Hilfs- und Zusatzmittel mitverwendet wie

a) leicht flüchtige organische Substanzen als weitere Treibmittel,

b) oberflächenaktive Zusatzstoffe 9, wie Emulgatoren und Schaumstabilisatoren,

ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Reaktionsverzögerer, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z.B. auf den Seiten 103 - 113 beschrieben.

Durchführung des erfindungsgemäßen Verfahrens:

Die Reaktionskomponenten werden erfindungsgemäß nach dem an sich bekannten Einstufenverfahrem, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München, 1966, z.B. auf den Seiten 121 - 205 beschrieben.

Die Umsetzung aller Komponenten erfolgt erfindungsgemäß bei einer Kennzahl über 70, vorzugsweise bei einer Kennzahl von 70 - 115.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter-oder Übervernetzung näher zu definieren. Die Kennzahl errechnet sich nach der allgemeinen Formel wie folgt:

$$\text{Kennzahl} = \frac{\text{Isocyanatmenge(praktisch) x 100}}{\text{Isocyanatmenge(theoretisch)}}$$

Erfindungsgemäß wird die Verschäumung in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, infrage. In der Form schäumt das schäumfähige Reaktionsgemisch auf und bildet den Formkörper. Erfindungsgemäß kann in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannt.

Die erfindungsgemäß erhältlichen Polyurethan-Weichformschaumstoffe finden z.B. Anwendung als Armaturentafeln, Armlehnen (auch PKW-Lehnen), Liege- und Sitzmöbel, Kopfstützen, Sitze in Verkehrsmitteln, vorzugsweise im Auto.

Beispiel 1

Herstellung eines Polyurethan-Weichformschaumstoffes

Komponente A

| | |
|---|---|
| 80 Gew.-Tle. | eines Polyetherpolyols der OH-Zahl 28, hergestellt durch Propoxylierung von Trimethylolpropan und anschließende Ethoxylierung des Propoxylierungsprodukts (Ethylenoxidgehalt = 13 %). Polyol A |
| 20 Gew.-Tle. | eines Polyetherpolyols der OH-Zahl 28, hergestellt durch Propoxylierung von 1,2-Propylenglykol und anschließende Ethoxylierung des Propoxylierungsprodukts (Ethylenoxidgehalt = 13 %). Polyol B |
| 3,6 Gew.-Tle. | Wasser |
| 0,2 Gew.-Tle. | Bis(dimethylaminoethyl)ether |
| 0,35 Gew.-Tle. | einer 33 %igen Lösung von Diazabicyclo(2,2,2)octan in Dipropylenglykol |
| 0,3 Gew.-Tle. | N,N-Dimethylaminopropylformamid |
| 0,75 Gew.-Tle. | Diethanolamin |
| 0,1 Gew.-Tle. | 2-Ethylhexansäure |
| 1,0 Gew.-Tle. | eines handelsüblichen Stabilisators (KS43 der Bayer AG) |
| 0,3 Gew.-Tle. | eines handelsüblichen Stabilisators (B5246 der Fa. Goldschmidt AG) |
| 2,0 Gew.-Tle. | eines Polyetherpolyols der OH-Zahl 36, hergestellt durch Propoxylierung von Glycerin und anschließende Ethoxylierung des Propoxylierungsprodukts mit einem Gehalt an polymerisierten Oxyethylengruppen von 73 %. |

Komponente B

MDI-Semiprepolymeres, hergestellt durch Umsetzung von MDI 85/25 (85 Gew.-% Zweikerngehalt, 25 % 2,4-MDI) mit einem Polyetherpolyol der OH-Zahl 28, welches durch Propoxylierung von Sorbit und anschließende Ethoxylierung des Propoxylierungsprodukts (Ethylenoxidgehalt = 13 %) hergestellt wird. NCO-Gehalt ca. 25 %.

Das Reaktionsgemisch wird mit einer Hochdruckmaschine vermischt und in eine 20 l-Kastenform eingetragen, die auf 50°C erwärmt ist. Die Form wird geschlossen und nach etwa 5 Minuten wird das Formteil aus der Form genommen. Die minimale Füllmenge wird experimentell ermittelt. Es ist diejenige Menge, bei der sich noch ein störungsfreies Formteil produzieren läßt.

Die Säure in der A-Komponente hat den Zweck, die Startreaktion zu verzögern.

Die mechanische Prüfung verschiedener Formteile ergibt folgendes Werteniveau:

| Kennzahl | 95 | 95 | 85 | 85 |
|---|---|---|---|---|
| Polyoltemperatur ($^\circ$C) | 30 | 46 | 30 | 46 |
| Isocyanattemperatur ($^\circ$C) | 20 | 36 | 20 | 36 |
| Rohdichte (kg/m$^3$) | 49,5 | 41,9 | 49,7 | 41,8 |
| Stauchhärte 40 % (kPa) | 3,35 | 2,07 | 2,33 | 1,47 |
| Zugfestigkeit (kPa) | 165 | 116 | 128 | 83 |
| Bruchdehnung (%) | 154 | 124 | 148 | 122 |
| DVR[*] 50% , $C_t$-Wert (%) | 6,7 | 6,0 | 7,0 | 7,4 |

Die durch die Temperaturerhöhung erreichte Rohdichtereduktion beträgt bei beiden Kennzahlen etwa 15 %.

[*] DVR = Druckverformungsrest

Beispiel 2

Herstellung eines Polyurethan-Weichformschaumstoffes

Komponente A

| 85 Gew.-Tle. | Polyol A |
|---|---|
| 15 Gew.-Tle. | Polyol B |
| 3,4 Gew.-Tle. | Wasser |
| 0,18 Gew.-Tle. | Bis(dimethylaminopropyl)ether |
| 0,50 Gew.-Tle. | einer 33 %igen Lösung von Diazobicyclo (2,2,2)octan in Dipropylenglykol |
| 0,60 Gew.-Tle. | N,N-Dimethylaminopropylformamid |
| 0,96 Gew.-Tle. | Diisopropanolamin |
| 0,20 Gew.-Tle. | eines handelsüblichen Stabilisators (B4617 der Fa. Goldschmidt AG) |
| 1,00 Gew.-Tle. | eines Polyetherpolyols der OH-Zahl 100, hergestellt durch Propoxylierung von Sorbit und anschließende Ethoxylierung des Propoxylierungsprodukts (Ethylenoxidgehalt = 80 %) |

Komponente B

MDI-Semiprepolymers nach Beispiel 1

Verarbeitung der Komponenten nach Beispiel 1

Die mechanische Prüfung der Formteile ergibt folgendes Wertniveau:

| Kennzahl | | 90 | 90 |
|---|---|---|---|
| Polyoltemperatur | ($^0$C) | 18 | 54 |
| Isocyanattemperatur | ($^0$C) | 16 | 24 |
| Rohdichte | (kg/m$^3$) | 52,9 | 47,2 |
| Stauchhärte 40 % | (kPa) | 4,15 | 3,38 |
| Zugfestigkeit | (kPa) | 158 | 126 |
| Bruchdehnung | (%) | 118 | 117 |
| DVR 50 %, $C_t$-Wert | (%) | 7,2 | 5,2 |

Die erreichte Rohdichtereduktion bei diesem Beispiel beträgt 11 %.

**Patentansprüche**

1. Verfahren zur Herstellung von Polyurethan-Weichformschaumstoffen niedriger Rohdichte durch Umsetzung von
   1. Polyisocyanaten mit
   2. Verbindungen mit mindestens zwei gegenüber Isocyanaten reaktionsfähigen Wasserstoffatomen vom Molekulargewicht 400 bis 10 000 in Gegenwart von
   3. Katalysatoren und
   4. Wasser als Treibmittel sowie gegebenenfalls in Gegenwart von
   5. Verbindungen mit mindestens zwei gegenüber Isocyanaten reaktionsfähigen Wasserstoffatomen vom Molekulargewicht 32 bis 399 als Kettenverlängerungs- und Vernetzungsmittel und
   6. weiteren, an sich bekannten Hilfs- und Zusatzmitteln in einer geschlossenen Form,
   dadurch gekennzeichnet, daß das Reaktionsgemisch vor der Schaumbildung auf eine Temperatur von mindestens 40°C, vorzugsweige von 40 bis 60°C, gebracht worden ist und daß blockierte Amine als Katalysatoren mitverwendet werden.

2. Verfahren gemäß Anspruch 1, dadurch gekennzeichnet, daß als Polyisocyanate solche auf Basis von Diphenylmethan-4,4′-diisocyanat eingesetzt werden.

3. Verfahren gemäß Anspruch 1 und 2, dadurch gekennzeichnet, daß zusätzlich organische Treibmittel mitverwendet werden.

4. Verfahren gemäß Anspruch 1 bis 3, dadurch gekennzeichnet, daß als Verbindungen mit mindestens zwei gegenüber Isocyanaten reaktionsfähigen Wasserstoffatomen vom Molekulargewicht 400 bis 10 000 mindestens zwei Hydroxylgruppen aufweisende Polyether, welche mindestens 10 Gew.-% (bezogen auf alle Hydroxylgruppen) primäre Hydroxylgruppen aufweisen, eingesetzt werden.

**Claims**

1. A process for the production of low-density flexible polyurethane foams by reaction of
   1. polyisocyanates with
   2. compounds containing at least two isocyanate-reactive hydrogen atoms and having a molecular weight in the range from 400 to 10,000
   in the presence of
   3. catalysts and
   4. water as blowing agent
   and optionally in the presence of
   5. compounds containing at least two isocyanate-reactive hydrogen atoms and having a molecular weight in the range from 32 to 399 as chain extending and crosslinking agents and
   6. other auxiliaries and additives known **per se** in a closed mould,

characterized in that the reaction mixture is heated before foaming to a temperature of at least 40°C and preferably in the range from 40 to 60°C and in that blocked amines are used as catalysts.

2. A process as claimed in claim 1, characterized in that the polyisocyanates used are based on diphenyl-methane-4,4'-diisocyanate.

3. A process as claimed in claims 1 and 2, characterized in that organic blowing agents are additionally used.

4. A process as claimed in claims 1 to 3, characterized in that polyethers bearing at least two hydroxyl groups which contain at least 10% by weight (based on all the hydroxyl groups) primary hydroxyl groups are used as the compounds containing at least two isocyanate-reactive hydrogen atoms and having a molecular weight in the range from 400 to 10,000.

**Revendications**

1. Procédé de préparation de mousses souples moulées en polyuréthannes, à basse densité apparente, par réaction de :
    1. des polyisocyanate avec
    2. des composés contenant au moins deux atomes d'hydrogène réactifs avec les isocyanates, de poids moléculaire 400 à 10 000, en présence de
    3. des catalyseurs, et
    4. de l'eau en tant qu'agent porogène, et le cas échéant en présence de
    5. des composés contenant au moins deux atomes d'hydrogène réactifs avec les isocyanates, de poids moléculaire 32 à 399, servant d'agents d'allongement des chaînes et agents réticulants, et
    6. d'autres produits auxiliaires et additifs connus en soi, dans un moule fermé,
caractérisé en ce que l'on porte le mélange de réaction à une température d'au moins 40°C, de préférence de 40 à 60°C, avant formation de la mousse et en ce que l'on utilise conjointement, en tant que catalyseurs, des amines bloquées.

2. Procédé selon la revendication 1, caractérisé en ce que l'on utilise en tant que polyisocyanates des polyisocyanates à base du diphénylméthane-4,4'-diisocyanate.

3. Procécé selon les revendications 1 et 2, caractérisé en ce que l'on utilise en outre conjointement des agents porogènes organiques.

4. Procédé selon les revendications 1 à 3, caractérisé en ce que l'on utilise en tant que composés contenant au moins deux atomes d'hydrogène réactifs avec les isocyanates, de poids moléculaire 400 à 10 000, des polyéthers contenant au moins deux groupes hydroxy et au moins 10 % en poids de groupes hydroxy primaires par rapport aux groupes hydroxy totaux.